# EUROPÄISCHE PATENTSCHRIFT

(11) **EP 2 125 398 B1**
(45) Veröffentlichungstag und Bekanntmachung des Hinweises auf die Patenterteilung: **01.09.2010**
(21) Anmeldenummer: 08715758.2
(22) Anmeldetag: 14.02.2008
(51) Int. Cl.: B60G 17/052

(54) **LUFTFEDERUNGSEINRICHTUNG MIT AUSSCHLIESSLICH DRUCKMITTELBETÄTIGTEN STEUERVENTILEN**
PNEUMATIC SUSPENSION UNIT COMPRISING CONTROL VALVES THAT ARE EXCLUSIVELY ACTUATED BY A PRESSURE-MEDIUM
SYSTÈME DE SUSPENSION PNEUMATIQUE POURVU DE SOUPAPES DE COMMANDE ACTIONNÉES EXCLUSIVEMENT PAR UN FLUIDE SOUS PRESSION

(30) Priorität: 19.02.2007 DE 102007008156
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: VOITH, András, H-1183 Budapest (HU); TOTH, János, H-6000 Kecskemét (HU)
(74) Vertreter: Schönmann, Kurt
(86) Internationale Anmeldenummer: PCT/EP2008/001113
(87) Internationale Veröffentlichungsnummer: WO 2008/101627

(56) Entgegenhaltungen:
- EP-A- 0 714 796
- WO-A-91/07291
- DE-A1- 4 143 296
- DE-A1- 4 202 729
- DE-A1- 10 354 056
- GB-A- 2 280 877
- US-A- 5 273 308

## Beschreibung

### Stand der Technik

Die Erfindung geht aus von einer Luftfederungseinrichtung zum Heben und Senken des Fahrzeugaufbaus von luftgefederten Fahrzeugen mit Niveauregelung, gemäß dem Oberbegriff von Anspruch 1.

Bei Luftfederungseinrichtungen mit Luftfederbälgen ist zusätzlich zum Niveauregelventil, welches das Niveau einer Fahrzeugplattform oder eines Fahrzeugrahmens in bekannter Weise auf einen konstanten Wert einregelt, eine manuell betätigbare Niveauregelventileinheit vorgesehen, mittels der von einer Bedienperson manuell und unter Umgehung des Niveauregelventils eine gewünschte Niveaulage der Fahrzeugplattform bzw. des Fahrzeugsaufbaus eingestellt werden kann. Dazu wird die Niveauregelventileinheit manuell in die Stellungen "Heben", "Senken" oder "Stop" gestellt. Dazu weist die Niveauregelventileinheit Handbetätigungsmittel auf, womit z.B. eine für ein Beladen des Fahrzeugs an einer Laderampe gewünschte Niveaulage eingestellt werden kann. Weiterhin muss eine Stellung "Fahrt" vorhanden sein, in welcher das Niveauregelventil wieder wirksam wird.

Eine gattungsgemäße Luftfederungseinrichtung ist in der US-A-5273308 bzw. in der WO-A-91/07291 offenbart. Auch DE-A- 4 143 296 offenbart eine Luftfederungseinrichtung nach dem Oberbegriff des Anspruchs 1.

In der DE 42 02 729 C2 ist eine Luftfederungseinrichtung mit einem Niveauregelventil sowie mit einem manuell betätigbaren mechanischen Schaltventil bekannt, in welchem das Sperrventil, das Belüftungsventil sowie das Entlüftungsventil zusammengefasst sind. Da der durch das genannte Schaltventil geführte Luftstrom der Hauptluftstrom zur Versorgung der Luftfederbälge ist, muss das Schaltventil relativ große Strömungsquerschnitte aufweisen, wodurch solche mechanischen Ventile jedoch relativ teuer werden. Außerdem weisen solche Ventile eine nicht allzu hohe Dynamik auf.

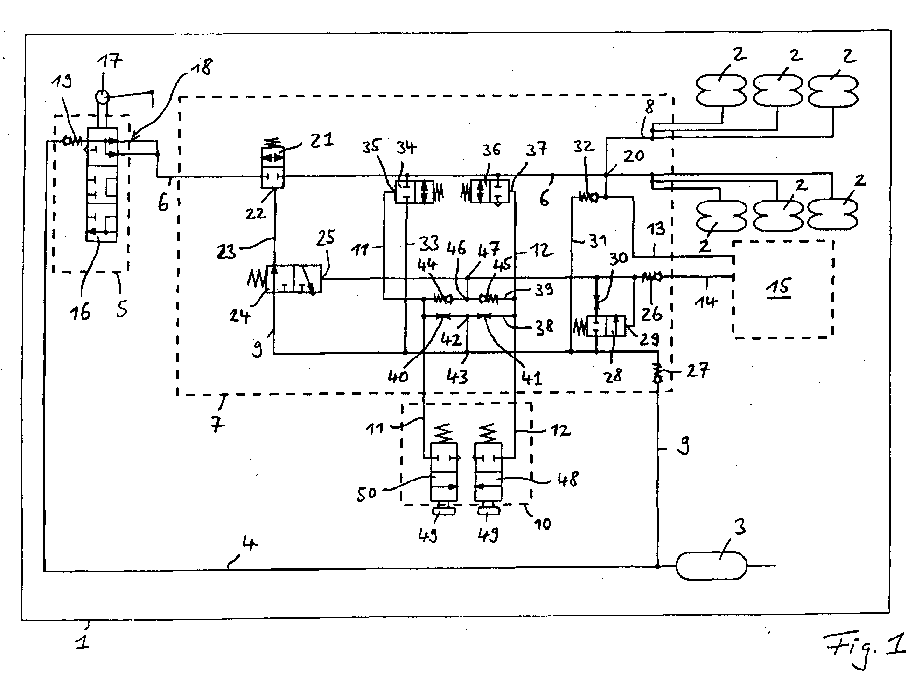

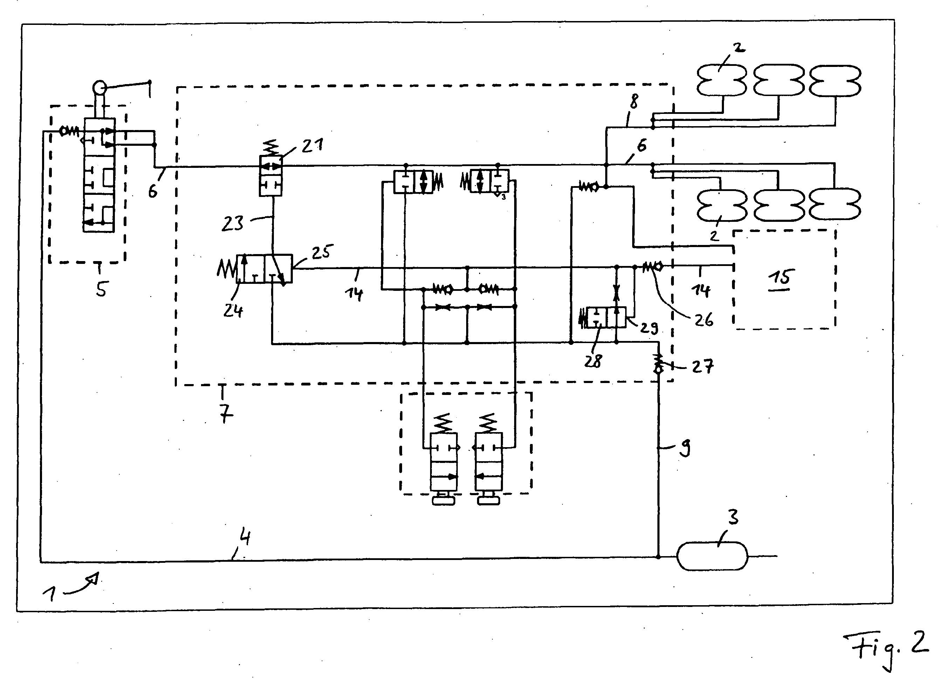

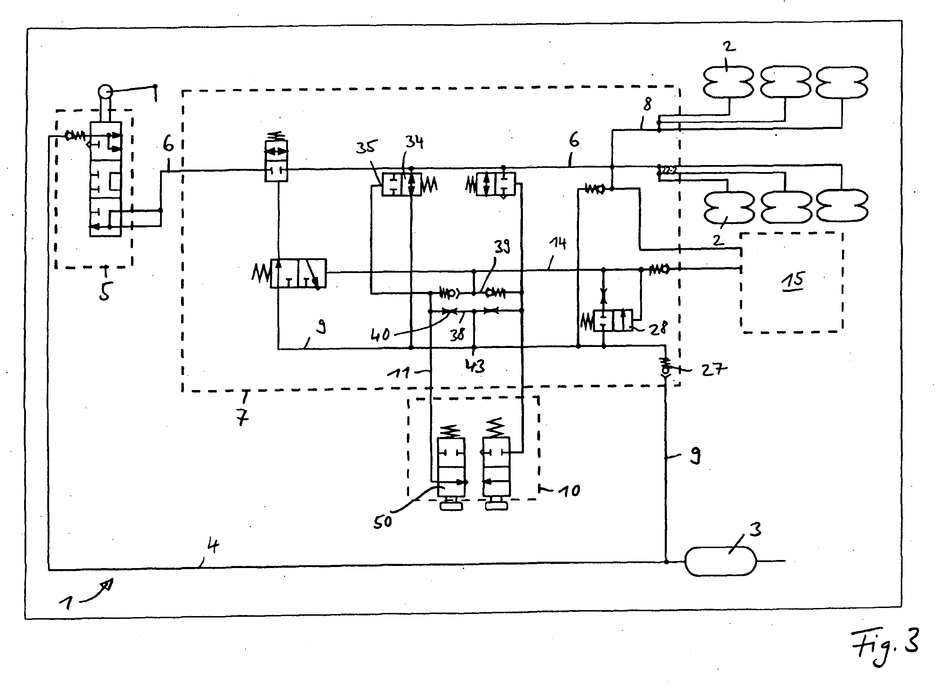

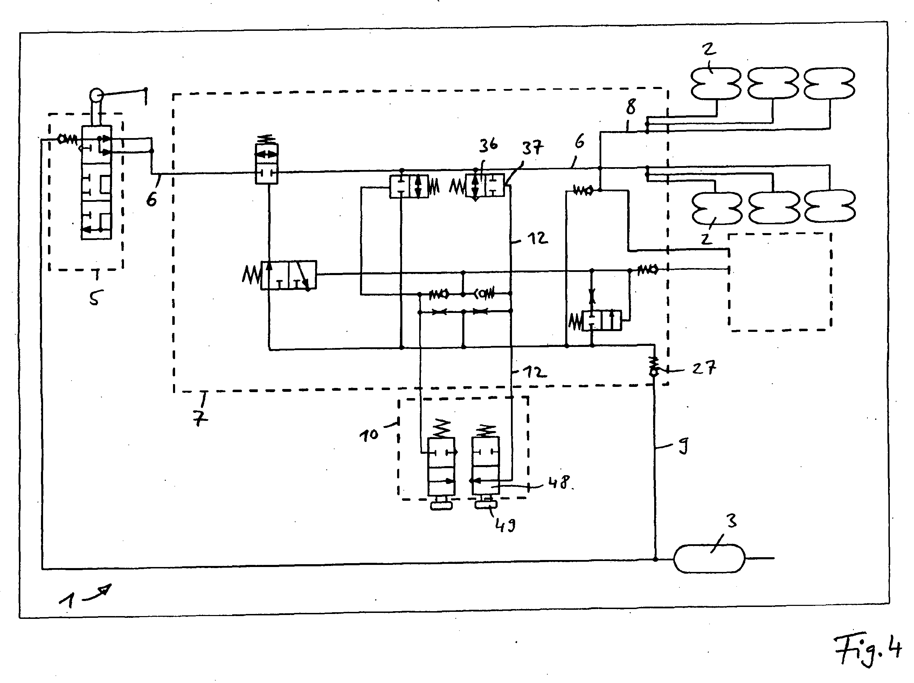

Eine weitere Luftfederungseinrichtung ist in der DE 103 54 056 A1 beschrieben. Dort werden gemäß der Ausführungsform von Fig.1 die Be- und Entlüftungsventile bzw. das Sperrventil durch Steuersignale eines elektronischen Steuergeräts direkt angesteuert oder die Luftfederbälge durch handbetätigte, in dem Hauptluftstrom eingebaute Ventile mit den Nachteilen wie oben beschrieben be- und entlüftet werden. Die Ausführungsform von Fig. 2 zeigt eine Variante mit mechanischpneumatischem Luftfederungsventil, wobei aber weiterhin das Sperrventil so ausgebildet ist, dass das Solenoid während der Fahrt ständig bestromt werden muss. Es werden gemäß der Ausführungsform von Fig.3 als Be- und Entlüftungsventile bzw. als Sperrventil pneumatisch betätigbare Ventile verwendet, welche von elektrisch steuerbaren Vorsteuerventilen betätigt werden. Zur manuellen Niveaueinstellung sind manuell betätigbare Steuerventile vorhanden. Nachteilig bei dieser Ausführung ist, dass die Ventile mit großem Querschnitt als Be- und Entlüftungsventile für das Heben und Senken sowie für die Feinregulierung während der Fahrt benutzt werden, wodurch der Luftverbrauch während der Fahrt relativ hoch ist. Die Ausführungsform von Fig. 4 zeigt eine Lösung mit ähnlichen Problemen auf, weil die Relaisventileinrichtung für großvolumige Be- und Entlüftung aber auch für die Feinregulierung während der Fahrt dient.

Der Erfindung liegt die Aufgabe zugrunde, eine Luftfederungseinrichtung derart weiter zu bilden, dass sie kostengünstig herstellbar ist und eine hohe Dynamik aufweist.

Erfindungsgemäß wird diese Aufgabe durch die Merkmale von Patentanspruch 1 gelöst.

### Offenbarung der Erfindung

Weil sämtliche Steuerventile druckmittelbetätigt sind, kann eine Versorgung eines Anhängerfahrzeugs mit elektrischer Energie entfallen, da das Druckmittel in

Vorratsbehältern auch über einen längeren Zeitraum unter Druck gehalten werden und die Luftfederungseinrichtung damit ihren vollen Funktionsumfang zur Verfügung stellen kann. Dies ist insbesondere von Vorteil, wenn die Anhängerplattform bei vom Zugfahrzeug abgekoppeltem Anhänger manuell auf ein bestimmtes Niveau eingestellt werden soll und neben dem Belüftungsventil, dem Entlüftungsventil und dem Sperrventil auch alle Vorsteuerventile druckmittelbetätigt ausgeführt sind, denn dann ist keine zusätzliche Versorgung mit elektrischer Energie notwendig

Die Erfindung basiert auf dem Gedanken, dass die weiteren Steuerventile wenigstens ein druckmittelbetätigtes Belüftungsventil zwischen einem Druckmittelvorrat und den Luftfederbälgen und wenigstens ein druckmittelbetätigtes Entlüftungsventil im Hauptdruckmittelstrom zwischen dem Sperrventil und den Luftfederbälgen beinhalten.

Dann können das Belüftungsventil und das Entlüftungsventil im Hauptdruckmittelstrom zwischen dem Druckmittelvorrat und den Luftfederbälgen als druckmittelbetätigte Ventile mit großem Strömungsquerschnitt ausgeführt und separat von den Betätigungsventilen in der Nähe der luftgefederten Achsen und der Luftfederbälgen eingebaut werden, welche durch ein demgegenüber relativ kleines Druckmittelsteuervolumen angesteuert werden. Solche druckmittelbetätigten Ventile sind einfach aufgebaut und relativ preisgünstig. Außerdem ergibt sich dadurch eine hohe Dynamik.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind wenigstens das Sperrventil, das Belüftungsventil und das Entlüftungsventil sowie beispielsweise auch eine Leitungsverbindung, an welcher sich die Druckmittelversorgungsleitungen der Luftfederbälge auf rechts- und linksseitige Zweige aufteilen, in einer Baueinheit zusammengefasst, welche in unmittelbarer Nachbarschaft zu den Luftfederbälgen angeordnet ist. Wegen der dann kurzen Druckmittelversorgungsleitungen der Luftfederbälge ergibt sich eine Luftfederungseinrichtung mit hoher Dynamik.

Bevorzugt ist weiterhin eine Steuereinrichtung vorgesehen, welche ein abhängig vom Fahrzustand des Fahrzeugs erzeugtes Druckmittel-Steuersignal als kurzzeitigen Druckimpuls aussteuert, welcher durch ein selbsthaltendes Ventil in ein andauernd wirkendes Druckmittel-Steuersignal gewandelt wird, welches ein Umschalten des Sperrventils bewirkt, um den Betriebszustand "Fahrt" herzustellen. In diesem Fall reicht zum Einstellen des Betriebszustands "Fahrt" ein kurzzeitiges Drucksignal aus.

Es kann nicht ausgeschlossen werden, dass bei einem über längere Zeit abgestelltem Fahrzeug, beispielsweise im Rahmen einer Verschiffung von einem belüfteten oder druckbeaufschlagten Bereich der Luftfederungseinrichtung Druckmittel in die Luftfederbälge eindringt und dadurch das Niveau der Fahrzeugplattform ungewollt angehoben wird, was zu Schadens- oder Gefahrensituationen führen kann. Deshalb ist es gerade vor einem längeren Abstellen eines mit einer Luftfederungseinrichtung ausgestatteten Fahrzeugs ratsam, die Luftfederbälge ständig entlüftet zu halten.

Während der Fahrt dient eine separate Niveauregeleinheit für die Regelung mit für die Fahrbedingungen optimalen Kennwerten. Eine von der Handsteuereinheit getrennte Ausbildung der Niveauregeleinheit ermöglicht auch eine Integration der Niveauregelventileinheit mit der Niveauregeleinheit.

Gemäß einer Weiterbildung der Erfindung ist deshalb ein manuell betätigbares Ventil zum Auslösen der Funktion "Dauerhaft vollständig abgesenkt" für eine andauernde Entlüftung der Luftfederbälge vorgesehen, ohne dass hierzu auch eine andauernde manuelle Betätigung notwendig wäre. Dies kann beispielsweise dadurch realisiert werden, dass durch einmalige Betätigung eines manuell betätigbaren Ventils das Entlüftungsventil dauerhaft in Entlüftungsstellung gebracht wird.

Bei Fahrzeugen ohne mechanische Höhenbegrenzung des Fahrzeugaufbaus besteht die Gefahr, dass im Rahmen einer manuellen Niveaueinstellung oder infolge einer schnellen Entladung ein derart hohes Niveau erreicht wird, dass die Luftfederbälge überladen und dadurch beschädigt werden.

Deshalb ist bevorzugt eine mit dem Niveauregelventil zusammenwirkende rein druckmittelbetätigte Höhenbegrenzungseinrichtung vorgesehen, welche bei einer manuellen Niveaueinstellung aber auch während der Entladung des Fahrzeugs das Niveau des Fahrzeugaufbaus auf ein vorgegebenes maximales Niveau begrenzt. Dies kann beispielsweise dadurch realisiert sein, dass die Höhenbegrenzungseinrichtung wenigstens ein durch ein Druckmittelsignal des Niveauregelventils steuerbares Ventil beinhaltet, welches wenigstens ein Ventil zum Belüften der Luftfederbälge druckmittelsteuert. Damit wird ein weiteres Steigern des Aufbauniveaus verhindert. Um darüber hinaus den Fahrzeugaufbau nach Erreichen einer kritisch hohen Niveaulage nicht weiter anheben zu können, kann das durch das Druckmittelsignal des Niveauregelventils steuerbare Ventil wenigstens ein Ventil zum Entlüften der Luftfederbälge druckmitteisteuern.

### Zeichnungen

Ausführungsbeispiele der Erfindung sind in den Zeichnungen dargestellt und in der nachfolgenden Beschreibung näher erläutert. In den Zeichnungen zeigt:
- Fig.1: eine schematisches Schaltbild einer einkreisigen Luftfederungseinrichtung gemäß einer Ausführungsform der Erfindung mit zwei Handbetätigungsmitteln im Betriebszustand "Stop";
- Fig.2: die Luftfederungseinrichtung von Fig.1 im Betriebszustand "Fahrt";
- Fig.3: die Luftfederungseinrichtung von Fig.1 im Betriebszustand "Heben";
- Fig.4: die Luftfederungseinrichtung von Fig.1 im Betriebszustand "Senken";
- Fig.5: eine schematisches Schaltbild einer Luftfederungseinrichtung gemäß einer weiteren Ausführungsform der Erfindung mit drei Handbetätigungsmitteln, von welchen eines den Betriebszustand "Fahrt" auslöst;
- Fig.6: eine schematisches Schaltbild einer einkreisigen Luftfederungseinrichtung gemäß einer weiteren Ausführungsform der Erfindung mit drei Handbetätigungsmitteln, von welchen eines den Betriebszustand "Dauerhaft vollständig abgesenkt" auslöst;
- Fig.7: die Luftfederungseinrichtung von Fig.6 im dauerhaft vollständig abgesenkten Betriebszustand;
- Fig.8: eine schematisches Schaltbild einer zweikreisigen Luftfederungseinrichtung gemäß einer weiteren Ausführungsform der Erfindung mit vier Handbetätigungsmitteln, von welchen eines den Betriebszustand "Dauerhaft vollständig abgesenkt" und eines den Betriebszustand "Fahrt" auslöst und weiterhin eine Ausbildungsform einer pneumatischen Höhenbegrenzung aufweist.

Bauteile und Baugruppen gleicher Funktion sind bei den verschiedenen Ausführungsformen jeweils mit den gleichen Bezugszahlen bezeichnet.

### Beschreibung der Ausführungsbeispiele

In Fig.1 ist als erstes Ausführungsbeispiel der Erfindung eine einkreisige Luftfederungseinrichtung 1 eines Anhängers einer Zugfahrzeug-Anhängerkombination dargestellt. "Einkreisig" bedeutet in diesem Zusammenhang, dass die Luftfederbälge 2 verschiedener Achsen und Achsseiten einem Kreis zugeordnet sind und deshalb nur gemeinsam be- und entlüftet werden können.

Bei der Luftfederungseinrichtungen 1 mit Luftfederbälgen 2 gemäß der Erfindung ist zusätzlich zu einem Niveauregelventil 16 innerhalb einer Niveauregeleinheit 5, welche das Niveau einer Fahrzeugplattform oder eines Fahrzeugrahmens in bekannter Weise auf einen konstanten Wert einregelt, eine manuell betätigbare Niveauregelventileinheit 7 vorgesehen, mittels der von einer Bedienperson manuell und unter Umgehung des Niveauregelventils 5 eine gewünschte Niveaulage der Anhängerplattform bzw. des Fahrzeugsaufbaus eingestellt werden kann. Dazu wird die Niveauregelventileinheit 7 durch eine Handsteuereinheit 10 in die Stellungen "Heben" und "Senken" pneumatisch geschaltet. Gemäß der in Fig.1 gezeigten Ausführungsform weist die Handsteuereinheit 10 hierzu beispielsweise zwei Handbetätigungsmittel für "Heben" und "Senken" auf, womit z.B. eine für ein Beladen des Fahrzeugs an einer Laderampe gewünschte Niveaulage eingestellt werden kann. Weiterhin muss ein Betriebszustand "Fahrt" vorhanden sein, in welcher das Niveauregelventil 5 wieder wirksam wird.

Die Luftfederbälge 2 des Anhängers sind zur Speisung mit Druckluft aus einem Druckluftbehälter 3 mit diesem durch eine Druckluftleitung 4 sowie durch pneumatische Leitungen 6 und 8 in Verbindung bringbar. Zwischen der Druckluftleitung 4 und der pneumatischen Leitung 6 ist die mit unterbrochener Linie umrandete Niveauregeleinheit 5 eingebaut, weiterhin ist zwischen der Niveauregeleinheit 5 und den Luftfederbälgen 2 die in Fig.1 mit unterbrochener Linie umrandete Niveauregelventileinheit 7 angeordnet, die auch direkt mittels einer Druckluftleitung 9 mit dem Druckluftbehälter 3 verbunden ist. An die Niveauregelventileinheit 7 ist die ebenfalls mit unterbrochener Linie umrandete Handsteuereinheit 10 durch pneumatische Leitungen 11, 12 angeschlossen. An die Niveauregelventileinheit 7 ist weiterhin durch pneumatische Leitungen 13 und 14 eine Steuereinheit 15 angekoppelt, die vorzugsweise Bestandteil eines elektronischen Bremssystem TEBS des Anhängers ist.

In Fahrt erhält die Steuereinheit 15 fahrdynamische Kennwerte, wie beispielsweise die momentane Geschwindigkeit und steuert abhängig von diesen Kennwerten pneumatische Steuersignale für die Niveauregelventileinheit 7 in die pneumatische Leitung 14 ein. Bei vom Zugfahrzeug abgekoppeltem Anhänger ist die Elektronik abgeschaltet, wodurch die Steuereinheit 15 keine pneumatischen Steuersignale mehr an die Niveauregelventileinheit 7 aussteuern kann.

Die Niveauregeleinheit 5 umfasst ein Niveauregelventil 16 mit einem Ventilschieber 17, der mit einer nicht gezeigten Anhängerachse derart in Wirkverbindung steht, dass eine vertikale Bewegung, d.h. eine Veränderung des Niveaus der Anhängerplattform oder des Anhängerrahmens in Bezug zur Anhängerachse den Ventilschieber 17 mitnimmt. Das Niveauregelventil 16 ist dazu beispielsweise am Anhängerrahmen befestigt. Ein Anschluss 19 des Niveauregelventils 16 ist über ein Rückschlagventil an die Druckluftleitung 4 angeschlossen. Ein weiterer Anschluss 18 steht in Verbindung mit der pneumatischen Leitung 6, die sich in der Niveauregelventileinheit 7 bis zu einer Leitungsverbindung 20 erstreckt, an die auch die pneumatische Leitung 8 angeschlossen ist und an welcher sich die Druckluftverbindungen zu den Luftfederbälgen der rechten Seite und der linken Seite teilen.

Dadurch, dass die Niveauregelventileinheit 7 und die Handsteuereinheit 10 in zwei Baueinheiten aufgeteilt und im Fahrzeug an beinahe beliebiger Stelle angeordet werden können, ist es möglich, die Niveauregeleinheit 5 und die Niveauregelventileinheit 7 in einer Baueinheit zu integrieren, um die Herstell- und Installationskosten zu senken. In diesem Fall wird die pneumatische Leitung 6 als innere Leitung ausgebildet.

In die pneumatische Leitung 6 ist ein beispielsweise pneumatisch betätigtes Sperrventil 21 eingebaut, das als 2/2 Wegeventil ausgebildet ist. Das Sperrventil 21 ist in seine Durchgangsstellung federbelastet und schaltet bei Vorlieben eines Drucks an seinem pneumatischen Steueranschluss 22 in Sperrstellung, der durch eine pneumatische Leitung 23 mit einem Anschluss eines beispielsweise als federbelastetes 3/2 Wegeventil ausgebildeten Steuerventils 24 gekoppelt ist. Das Sperrventil 21 verbindet das Niveauregelventil 16 mit den Luftfederbälgen 2 oder sperrt diese Verbindung.

Das Steuerventil 24 ist mit seinem anderen Anschluss an die Druckluftleitung 9 angeschlossen, ein weiterer Anschluss mündet durch eine Entlüftung ins Freie. Ein pneumatischer Steuereingang 25 des Steuerventils 24 ist an die pneumatische Leitung 14 angeschlossen. Daher verbindet das pneumatisch betätigte Steuerventil 24 in seiner federbelasteten, drucklosen Stellung die Druckluftleitung 9 mit dem Steueranschluss 22 des Sperrventils 21 oder druckbeaufschlagt letzteren mit seiner Entlüftung.

In einer weiteren, hier nicht dargestellten Ausführungsform kann das Sperrventil 21 als 2/2-Wegewentil mit Feder-Rückführung so ausgebildet sein, dass es in nicht angesteuertem Zustand die pneumatische Leitung 6 schließt und angesteuert öffnet. Bei dieser Variante entfällt das Steuerventil 24 und die pneumatische Leitung 14 wird direkt an den Steueranschluss 22 des Sperrventils 21 angebunden.

Die pneumatische Leitung 14 enthält ein Rückschlagventil 26 innerhalb der Niveauregelventileinheit 7. In ähnlicher Weise ist ein Rückschlagventil 27 in die Druckluftleitung 9 eingebaut. Zwischen der Druckluftleitung 9 und der pneumatischen Leitung 14 ist ein Erinnerungsventil 28 in der Nähe des Rückschlagventils 27 eingebaut.

Das Erinnerungsventil 28 ist als federbelastetes 2/2 Wegeventil ausgebildet, sein Steuereingang 29 ist mit der pneumatischen Leitung 14 verbunden. Zwischen der pneumatischen Leitung 14 und einem Anschluss des Erinnerungsventils 28 ist eine Drossel 30 angeordnet, der andere Anschluss liegt an der Druckluftleitung 9 an. Das Erinnerungsventil 28 funktioniert wie folgt: Wenn ein kurzzeitiges pneumatisches Drucksignal an seinem Steuereingang 29 anliegt, schaltet es in seine Durchgangsstellung und behält diese Stellung bei, auch ohne dass das Drucksignal weiterhin vorhanden ist, so dass es sich um ein sog. selbsthaltendes Ventil handelt. Bei einem Druckabfall in der Leitung 14 schaltet es federbelastet in seine Sperrstellung zurück.

Zwischen der Druckluftleitung 9 und der pneumatischen Leitung 6 ist eine pneumatische Verbindungsleitung 31 angeordnet, die mit einem Rückschlagventil 32 versehen ist. Das Rückschlagventil 26 lässt nur eine Luftströmung von der pneumatischen Leitung 6 in Richtung Druckluftleitung 9 zu. Zweckmäßigerweise ist die Verbindungsleitung 31 an die Leitungsverbindung 20 angeschlossen, ebenso wie die pneumatische Leitung 13 innerhalb der Niveauregelventileinheit 7. Ferner sind die Druckluftleitung 9 und die pneumatische Leitung 6 mittels einer pneumatischen Verbindungsleitung 33 verbunden, in welcher ein Belüftungsventil 34 angeordnet ist, das beispielsweise als 2/2 Wegeventil ausgebildet ist, dessen Steueranschluss 35 ständig mit der pneumatischen Leitung 11 in Verbindung steht. Wenn ein Steuerdruck am Steueranschluss 35 des Belüftungsventils 34 ansteht, schaltet dieses in seine Sperrstellung, andernfalls in seine Durchgangsstellung.

An die pneumatische Leitung 6 ist weiterhin ein Entlüftungsventil 36 angekoppelt, das einen Entlüftungsanschluss ins Freie aufweist. Das Entlüftungsventil 36 ist als 2/2 Wegeventil ausgebildet, dessen Steuereingang 37 mit der pneumatischen Leitung 12 ständig in Verbindung steht. Wenn ein Steuerdruck am Steueranschluss 37 des Entlüftungsventils 36 ansteht, schaltet dieses in seine Sperrstellung, andernfalls in seine Durchgangsstellung, in welcher es die Leitung 6 entlüftet.

Die pneumatischen Leitungen 11 und 12 sind innerhalb der Niveauregelventileinheit 7 durch Verbindungsleitungen 38 bzw. 39 verbunden. In der Verbindungsleitung 38 sind zwei Drosseln 40 bzw. 41 angeordnet, zwischen denen eine Leitungsverbindung 42 ausgebildet ist, die einen Anschluss 43 mit der Druckluftleitung 9 hat. In der Verbindungsleitung 39 sind zwei Rückschlagventile 44 bzw. 45 angeordnet, zwischen denen eine Leitungsverbindung 46 ausgebildet ist, die mit der pneumatischen Leitung 14 einen Anschluss 47 hat. Die beiden Rückschlagventile 44 und 45 sind so ausgebildet und angeordnet, dass sie eine Luftströmung von der pneumatischen Leitung 14 in die pneumatische Leitung 12 bzw. 11 zulassen.

In der Handsteuereinheit 10 ist an die pneumatische Leitung 12 ein Betätigungsventil 48 angekoppelt, das durch Handbetätigungsmittel 49, beispielsweise in Form eines Tasters betätigt wird. Das Betäfigungsventil 48 ist für das Senken der Anhängerplattform vorgesehen und als 2/2-Wegeventil ausgebildet. Durch eine Rückstellfeder in Sperr- oder Ruhestellung vorgespannt schließt es die pneumatische Leitung 12, in der von einer Bedienperson eingestellten Durchgangsstellung entlüftet es die pneumatische Leitung 12 ins Freie. Über den Taster 49 ist das Betätigungsventil 48 folglich gegen die Kraft einer Rückstellfeder betätigbar.

Weiterhin ist in der Handsteuereinheit 10 an die pneumatische Leitung 11 ein Betätigungsventil 50 angekoppelt, das mit Handbetätigungsmitteln 49 wie einem Taster versehen ist. Das Betätigungsventil 50 ist für das Heben der Anhängerplatiform vorgesehen und als 2/2 Wegeventil ausgebildet. Durch die Rückstellfeder in Ruhe- oder Sperrstellung vorgespannt, schließt es die pneumatische Leitung 11, in der von der Bedienperson eingestellten Durchgangsstellung entlüftet es die pneumatische Leitung 11 ins Freie.

Im in Fig.1 gezeigten Betriebszustand "Stop", in dem weder ein Heben noch ein Senken der Anhängerplattform stattfindet, befindet sich das Sperrventil 21 in seiner druckbeaufschlagten Sperrstellung, d.h. sein Steueranschluss 22 ist belüftet, weil das an seinem Steuereingang 25 drucklose und federbelastete Steuerventil 24 die Leitung 23 auf die Leitung 9 durchschaltet, so dass Druckluft aus dem Vorratsbehälter 3 durch die pneumatische Leitung 9 in die pneumatische Leitung 23 hineinströmen kann. Die Ventile 28, 48, 50 befinden sich durch Rückstellfedern in Sperr- oder Ruhestellung vorgespannt. Die pneumatische Leitungen 11 und 12 stehen jedoch durch die Drosseln 40 und 41 mit der Druckluftleitung 9 und dadurch mit dem Vorratsbehälter 3 in Verbindung und werden mit Druckmittel aufgefüllt, wodurch das Belüftungsventil 34 sowie das Entlüftungsventil 36 angesteuert und in geschlossenem Zustand gebracht werden. Somit sind bei dieser Ausführungsform die pneumatisch gesteuerten Ventile 21, 28, 34, 36 und die Betätigungsventile 48, 50 derart ausgeführt und miteinander verschaltet, dass sich, ein Vorhandensein von Druck im Vorratsbehälter 3 vorausgesetzt, der Betriebszustand "Stop", in welchem die pneumatische Leitung 14 nicht unter Druck steht und wenigstens ein von den beiden Betätigungsventilen 48 und 50 betätigt ist (d.h. ein "Hebe-" oder "Senksignal" ausgelöst wurde) automatisch und ohne Zutun einer Bedienperson selbsttätig einstellt. Dieser Zustand wird durch die Betätigung der Taster 49 (Heben, Senken) pneumatisch überschrieben und stellt sich nach Loslassen des jeweiligen Tasters 49 wieder ein.

In Fig.2 ist die Luftfederungseinrichtung 1 des Anhängers im Betriebszustand "Fahrt" dargestellt. Dieser Betriebszustand stellt sich bei dieser Ausführungsform ebenfalls selbsttätig ein, wenn die Niveauregelventileinheit 7 über die Leitung 14 ein pneumatisches Steuersignal z.B. in Form eines kurzen Druckimpulses von der Steuereinheit 15 erhält.

Die Steuereinheit 15 steuert den Druckimpuls durch die pneumatische Leitung 14 bis zu dem Steuereingang 25 des Steuerventils 24 und durch die Rückschlagventile 44, 45 bis zu den Steueranschlüssen 35, 37 der Be- und Entlüftungsventile 34, 36 aus, wodurch diese Ventile 34, 36 entsprechend geschaltet werden. Gleichzeitig wird der Steuereingang 29 des Erinnerungsventils 28 auch druckbeaufschlagt, welches daraufhin in Durchgangsstellung umgeschaltet wird. In seiner Durchgangsstellung steuert das Erinnerungsventil die in der Druckluftleitung 9 anstehende Druckluft aus dem Vorratsbehälter in die pneumatische Leitung 14 ein, wodurch dort ein anhaltender oder stetiger Druck vorhanden ist, der am Steuereingang 25 des Steuerventils 24 wirkt. Das Steuerventil 24 ist ein Inversionsventil, als es bei belüftetem Steuereingang 25 in seine Entlüftungsstellung umgeschaltet und folglich die pneumatische Leitung 23 über die Entlüftung ins Freie entlüftet wird. Aufgrund des Druckabfalls an seinem Steuereingang 22 schaltet das Sperrventil 21 in seine Durchgangsstellung um und verbindet die Luftfederbälge 2 über die pneumatischen Leitungen 6 und 8 mit der Niveauregeleinheit 5. Im Betriebszustand "Fahrt" regelt dann die Niveauregeleinheit 5 das Niveau der Anhängerplattform in bekannter Weise ein.

In Fig.3 ist das Luftfederungseinrichtung 1 im Betriebszustand "Heben" dargestellt. Dieser Betriebszustand soll nur bei stehendem oder geparktem Anhänger möglich sein, gleich ob dieser noch an das Zugfahrzeug angekoppelt ist oder nicht. Im Betriebszustand "Heben" wird das Niveau der Anhängerplattform erhöht.

Hierzu wird das Handbetätigungsmittel 49 des Betätigungsventils 50 manuell betätigt, wodurch die pneumatische Leitung 11 ins Freie entlüftet und damit auch der Druck in der pneumatischen Leitung 14 sinkt, weil diese über die Verbindungsleitung 39 mit der pneumatischen Leitung 11 in Verbindung steht. Aufgrund dessen schaltet das Erinnerungsventil 28 wieder in seine Sperrstellung zurück, in welcher die Verbindung zwischen der pneumatischen Leitung 14 und der Druckluftleitung 9 aufgehoben ist.

Gleichzeitig vermindert sich der Luftdruck am Steuereingang 35 des Belüftungsventils 34, weswegen dieses in Durchgangsstellung umschaltet. Aufgrund dessen wird die pneumatische Leitung 6 mit der Druckluftleitung 9 gekoppelt und Druckluft kann aus dem Vorratsbehälter 3 durch die Druckluftleitung 9 und die pneumatische Leitungen 6, 8 in die Luftfederbälge 2 hineinströmen. Das Niveau der Anhängerplattform wird erhöht, so lange das Handbetätigungsmittel 49 gedrückt ist bzw. bis die Anhängerplattform die mechanisch oder pneumatisch begrenzte maximale Höhe erreicht.

Beim Loslassen des Handbetätigungsmittels 49 wird das federbelastete Betätigungsventil 50 umgeschaltet und folglich die pneumatische Leitung 11 endseitig gesperrt oder verschlossen. Weil dann die pneumatische Leitung 11 nicht mehr entlüftet, sondern über die Verbindungsleitung 38, die Leitungsverbindung 43, die Drossel 40 und die Druckluftleitung 9 belüftet wird, kann sich am Steueranschluss 35 des Belüftungsventils 34 Druck aus dem Vorratsbehälter 3 aufbauen und es in Sperrstellung schalten, so dass die Verbindungsleitung 33 gesperrt und das Heben der Anhängerplattform beendet wird. Damit ist der Betriebszustand "Stop" der Luftfederungseinrichtung 1 des geparkten Anhängers wieder erreicht.

In Fig.4 ist die Luftfederungseinrichtung 1 im Betriebszustand "Senken" dargestellt. Dieser Betriebszustand soll wiederum nur bei stehendem oder geparktem Anhänger möglich sein, gleich ob dieser noch an das Zugfahrzeug angekoppelt ist oder nicht. In diesem Betriebszustand wird das Niveau der Anhängerplattform gesenkt.

Hierzu wird das Handbetätigungsmittel 49 betätigt, wodurch das Betätigungsventil 48 umgeschaltet wird, um die pneumatische Leitung 12 ins Freie zu entlüften. Dadurch wird der Luftdruck am Steuereingang 37 des Entlüftungsventils 36 vermindert, weswegen dieses in Durchgangsstellung umschaltet, in welcher die pneumatischen Leitungen 6 bzw. 8 durch das Entlüftungsventil 36 hindurch ins Freie entlüftet werden, was bewirkt, dass Druckluft aus den Luftfederbälgen 2 herausströmt. Dabei wird das Niveau der Anhängerplattform vermindert, so lange das Handbetätigungsmittel 49 gedrückt ist bzw. die Anhängerplattform die mechanisch begrenzte minimale Höhe erreicht. Beim Loslassen des Handbetätigungsmittels 49 wird das Betätigungsventil 48 umgeschaltet und die pneumatische Leitung 12 endseitig verschlossen oder gesperrt. Die pneumatische Leitung 12 wird sodann durch die Verbindungsleitung 38, die Drossel 41 und die Druckluftleitung 9 vom Vorratsbehälter 3 mit Druckluft befüllt, wodurch sich der Luftdruck am Steueranschluss 37 erhöht und das Entlüftungsventil 36 in seine Sperrstellung umschaltet, was das Entleeren der Luftfederbälge 2 durch die pneumatischen Leitungen 6 und 8 und damit das Senken der Anhängerplattform beendet. Damit ist wiederum der Betriebszustand "Stop" der Luftfederungseinrichtung 1 des geparkten Anhängers erreicht.

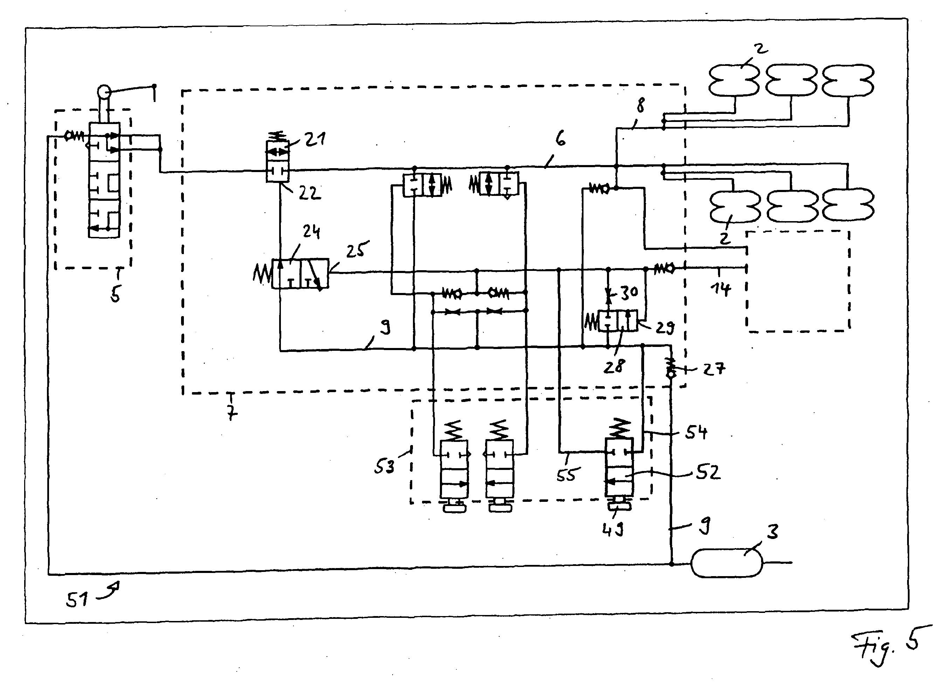

In Fig.5 ist ein weiteres Ausführungsbeispiel der Luftfederungseinrichtung 51 gemäß der Erfindung mit drei Handbetätigungsmitteln bei abgestelltem oder geparktem Anhänger dargestellt. Das Luftfederungseinrichtung 51 ist grundsätzlich wie die Luftfederungseinrichtung 1 gemäß des vorangehenden Ausführungsbeispiels aufgebaut, es weist aber ein zusätzliches Betätigungsventil 52 mit Handbetätigungsmitteln 49 wie beispielsweise einem Taster auf. Das Betätigungsventil 52 dient dazu, die im Zustand "Stop" befindliche Luftfederungseinrichtung 51 manuell auf den Betriebszustand "Fahrt" umzustellen.

Dieses Betätigungsventil 52 ist in der Handsteuereinheit 53 untergebracht und an zwei pneumatische Leitungen 54, bzw. 55 angeschlossen. Die pneumatische Leitung 54 ist an die Druckluftleitung 9 angekoppelt und die pneumatische Leitung 55 an die pneumatische Leitung 14. Das Betätigungsventil 52 ist beispielsweise als 2/2 Wegeventil ausgebildet, in der federbelasteten Sperrstellung trennt es die beiden pneumatischen Leitungen 54 und 55 voneinander, in der handbetätigten Durchgangsstellung werden diese miteinander verbunden. Durch Betätigen der Handbetätigungsmittel 49 wird das Betätigungsventil 52 folglich in Durchgangsstellung umgeschaltet, wodurch die pneumatischen Leitungen 54 und 55 gekoppelt werden und Druckluft aus der Druckluftleitung 9 in die pneumatische Leitung 14 einströmen kann, wodurch der Druck am Steuereingang 25 des Steuerventils 24 ansteht und dieses in eine Stellung umschaltet, in welcher die pneumatische Leitung 23 über die Entlüftung entlüftet wird, was wiederum eine Drucksenkung am Steueranschluss 22 des Sperrventils 21 bewirkt, welches daraufhin in Durchgangsstellung umschaltet. Hierdurch erfolgt die Niveauregulierung der Anhängerplattform ausschließlich durch das Niveauregelventil 5. Gleichzeitig werden die Be- und Entlüftungsventile 34, 36 in den gesperrten Zustand gebracht.

Der Unterschied zwischen der Luftfederungseinrichtung 1 gemäß der vorangehend beschriebenen Ausführungsform und der hier beschriebenen Ausführungsform 51 liegt darin, dass bei letzterer eine Betätigungsperson vor der Abfahrt der geparkten Zugfahrzeug-Anhängerkombination die Luftfederungseinrichtung 51 in den Betriebszustand "Fahrt" bringen kann, während bei der Luftfederungseinrichtung 1 von der Steuereinheit 15 über die pneumatische Leitung 14 ein pneumatisches Steuersignal selbsttätig in das Steuerventil 24 sowie in die Be- und Entlüftungsventile 34, 36 eingesteuert wird, um das Sperrventil 21 sowie die Be- und Entlüftungsventile 34, 36 derart umzuschalten, dass die Niveauregulierung im Betriebszustand "Fahrt" ausschließlich durch das Niveauregelventil 5 erfolgt. Die Handbetätigung führt zu dem gleichen Zustand wie die von der Steuereinheit 15 durch Druckinpuls ausgelöste Betätigung auf den Betriebszustand "Fahrt", so dass beide Möglichkeiten - selbsttätiges Umstellen und manuelles Umstellen vom Betriebszustand "Stop" in den Betriebszustand "Fahrt" - parallel nebeneinander existieren. Ansonsten ist die Funktion der Luftfederungseinrichtung 51 identisch mit der der Luftfederungseinrichtung 1.

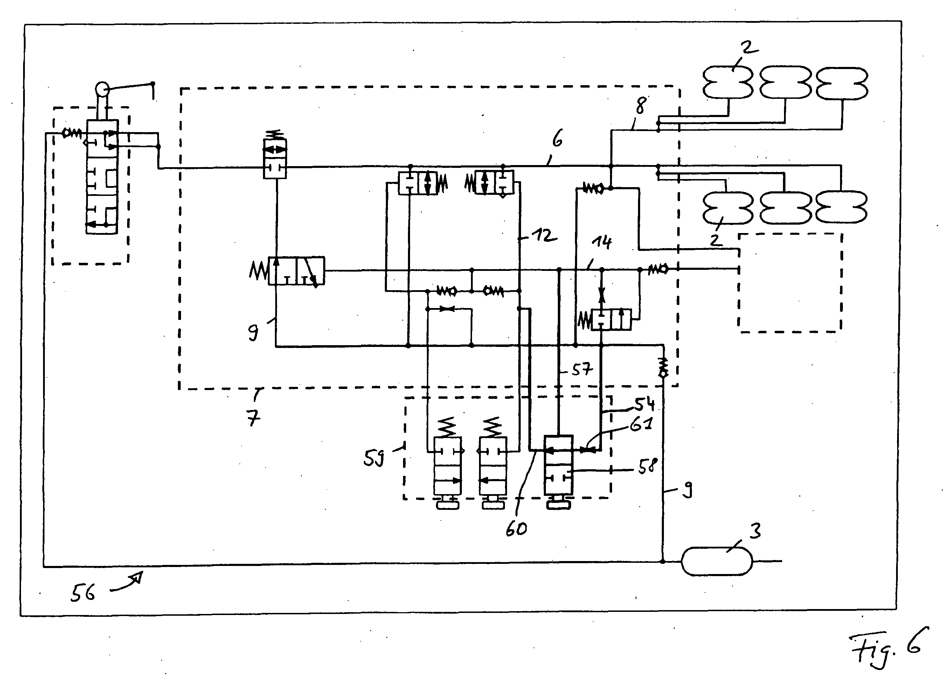

In Fig.6 ist ein weiteres Ausführungsbeispiel einer Luftfederungseinrichtung 56 eines Anhängers gemäß der Erfindung mit drei Handbetätigungsmitteln für "Heben", "Senken" und "Dauerhaft vollständig abgesenkt" im Betriebszustand "Stop" dargestellt, in welchem der Anhänger geparkt ist. Die Luftfederungseinrichtung 56 ist grundsätzlich wie die Luftfederungseinrichtung 51 gemäß des vorangehenden Ausführungsbeispiels aufgebaut, es weist aber ein durch ein Handbetätigungsmittel 49 betätigbares Betätigungsventil 58 auf, durch welches die Funktion "Dauerhaft vollständig abgesenkt" ausgelöst werden kann. "Dauerhaft vollständig abgesenkt" bedeutet in diesem Zusammenhang, dass die Anhängerplattform durch Entleeren der Luftfederbälge 2 auf ihr niedrigstes Niveau gebracht wird, um dieses dauerhaft einzunehmen, was beispielsweise bei einer Verschiffung des Anhängers aus Sicherheitsgründen notwendig ist.

Das durch Handbetätigungsmittel 49 betätigbare Betätigungsventil 58 ist in der Handsteuereinheit 59 untergebracht und an drei pneumatische Leitungen 54, 57, 60 angeschlossen. Die pneumatische Leitung 54, die eine Drossel 61 enthält, ist an die Druckluftleitung 9 angekoppelt, die pneumatische Leitung 60 an die pneumatische Leitung 12. Das Betätigungsventil 58 ist so ausgebildet, dass es beim Loslassen seines Tasters 49 nicht selbsttätig rückschaltet. Zum Umschalten des Betätigungsventils 58 ist eine Steuerleitung 57 vorgesehen, welche mit der pneumatischen Leitung 14 in Verbindung steht.

Das Betätigungsventil 58 ist beispielsweise als 2/2 Wegeventil ausgebildet, seine Ruhestellung ist die Durchgangsstellung, in welcher es die beiden pneumatischen Leitungen 54 bzw. 60 miteinander koppelt und Druckluft aus der Druckluftleitung 9 in die pneumatische Leitung 12 einströmen kann. Dieser Druck steht am manuellen Betätigungsventil 48 an. Wenn nun das manuelle Betätigungsventil 48 durch den Taster 49 betätigt wird, werden die Luftfederbälge 2 entlüftet, wie bereits zu Fig.4 erläutert wurde. Nach Loslassen des Tasters 49 wird das Betätigungsventil 48 durch die Wirkung der Rückstellfeder selbsttätig in seine Sperrstellung rückgestellt und die Niveauregeleinheit 7 stellt sich normalerweise in "Stop"-Zustand. Wenn aber das Betätigungsventil 58 gleichzeitig in Sperrzustand umgestellt wird, wird die pneumatische Leitung 12 nicht nachgefüllt, wodurch die Niveauregeleinheit 7 ständig im Zustand "Senken" verbleibt. Wenn die Steuerleitung 57, welche mit der pneumatischen Leitung 14 in Verbindung steht druckbeaufschlagt wird, stellt sich das Betätigungsventil 58 in den offenen Zustand zurück.

Diese Funktion ist besonders vorteilhaft bei Fahrzeugen wie Kipp- und Containerfahrzeugen wo eine schnelle Entladung gefragt ist und auch ein geringer Balgdruck ausreichen muss, den unbeladenen Fahrzeugaufbau schnell zu heben. Es kann auch nicht ausgeschlossen werden, dass bei einem über längere Zeit abgestellten Anhänger, beispielsweise im Rahmen einer Verschiffung von einem belüfteten oder druckbeaufschlagten Bereich der Luftfederungseinrichtung 1 Druckluft in die Luftfederbälge 2 eindringt und dadurch das Niveau der Anhängerplattform ungewollt angehoben wird, was zu Schadens- oder Gefahrensituationen führen kann. Deshalb ist es gerade vor einem längeren Abstellen des Anhängers ratsam, die Luftfederbälge 2 ständig mit einer Entlüftung in Verbindung zu halten.

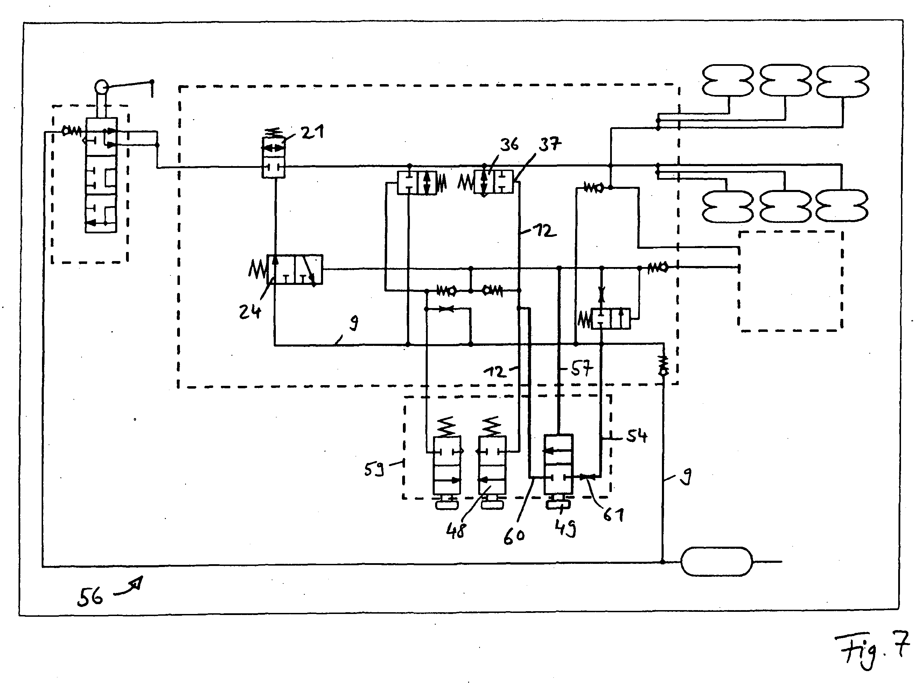

Dies wird durch den Betriebszustand "Dauerhaft vollständig abgesenkt" herbeigeführt, in welchem die Anhängerplattform ihr niedrigstes Niveau durch eine volle oder beinahe volle Entlüftung der Luftfederbälge dauerhaft einnimmt. In Fig.7 ist deshalb die Luftfederungseinrichtung 56 des Anhängers von Fig.6 in diesem Betriebszustand dargestellt, welcher nach bzw. zusammen mit dem Betriebszustand "Senken" gemäß Fig.4 eingestellt werden kann. Wenn nämlich der Taster 49 des Betätigungsventils 48 zum Senken betätigt wird, gelangt letzteres in Durchgangsstellung, wodurch die Luftfederbälge 2 entlüftet werden. Wenn nun zusätzlich der Taster 49 des Betätigungsventils 58 gedrückt wird, wird die Verbindung zwischen den pneumatischen Leitungen 54 und 60 und damit zwischen dem Vorratsbehälter 3 und dem Betätigungsventil 48 unterbrochen, wodurch kein Druck mehr auf das Betätigungsventil 48 wirkt. Das führt dazu, dass das Betätigungsventil 48 auch bei Loslassen seines Tasters 49 nicht mehr in seine Sperrstellung zurückschaltet und folglich auch das Entlüftungsventil 36 in Durchgangstellung verbleibt, wodurch die Luftfederbälge 2 mit der Entlüftung verbunden bleiben. Da das Betätigungsventil 58 beim Loslassen der Handbetätigungsmittel 49 nicht selbsttätig rückschaltet, hält dieser Zustand solange an, bis durch ein Drucksignal in der Leitung 57, welches von der Steuereinheit 15 auf ein elektrisches Signal des TEBS beispielsweise nach Ankoppeln des über längere Zeit abgestellten Anhängers an das Zugfahrzeug hin erzeugt wird, das Betätigungsventil 58 wieder in die Durchgangsstellung gemäß Fig.6 geschaltet wird.

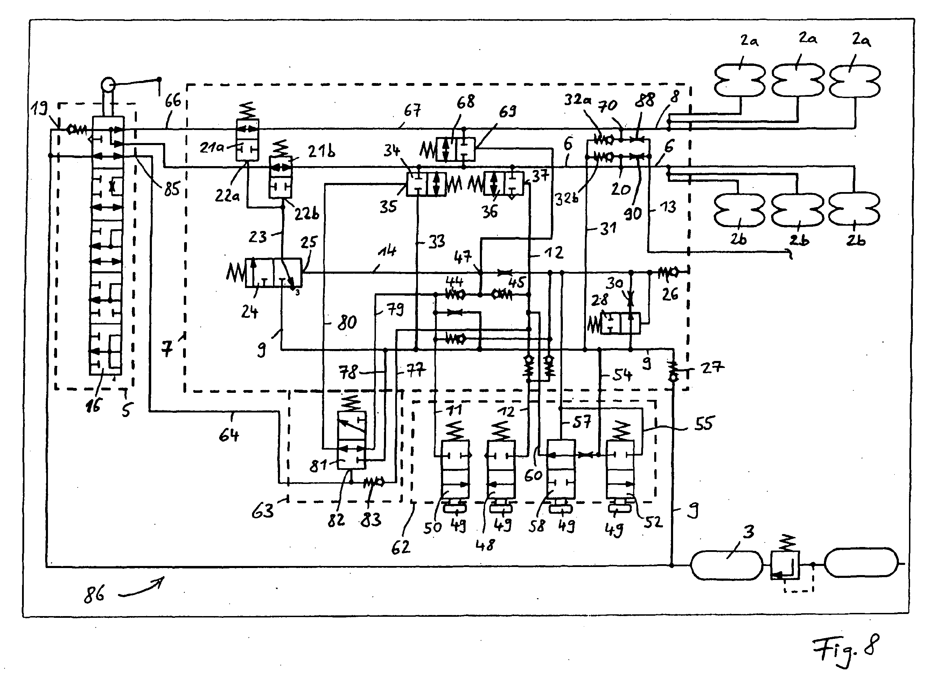

In Fig.8 ist ein weiteres Ausführungsbeispiel einer Luftfederungseinrichtung 86 eines Anhängers gemäß der Erfindung mit vier Handbetätigungsmitteln 49 im Betriebszustand "Stop" dargestellt. Die Luftfederungseinrichtung 86 enthält alle Einheiten und deren Verbindungen, die auch die Luftfederungseinrichtung 56 gemäß Fig.7 aufweist. Das Luftfederungseinrichtung 86 ist jedoch zweikreisig ausgebildet, d.h. die linksseitigen und die rechtsseitigen Luftfederbälge 2a und 2b sind getrennt voneinander be- bzw. entlüftbar und hierzu durch die pneumatische Leitung 8 bzw. 66 bzw. 67 und durch die pneumatische Leitung 6 an die Niveauregelventileinheit 7 angeschlossen.

Die pneumatischen Leitungen 66, 67 erstrecken sich in der Niveauregelventileinheit 7 bis zur Leitungsverbindung 70, an welche auch die pneumatische Leitung 8 der rechtsseitigen Luftfederbälge 2a angeschlossen ist. Die linksseitigen Luftfederbälge 2b sind durch die pneumatische Leitung 6 an die Leitungsverbindung 20 angeschlossen, an welche auch die bis zur Niveauregeleinheit 5 weiter geführte pneumatische Leitung 6 angeschlossen ist. Die pneumatische Leitung 66 enthält das Sperrventil 21 a, dessen Steueranschluss 22a an die pneumatische Leitung 23 angeschlossen ist. Die pneumatischen Leitungen 6 und 66 sind mit einer pneumatischen Leitung 67, die zwischen dem Sperrventil 21 und der Leitungsverbindung 70 angeordnet ist, gekoppelt. Für die rechtsseitigen Luftfederbälge 2a ist folglich ein eigenes Sperrventil 21 a vorgesehen, welches das Niveauregelventil 16 mit diesen verbindet oder trennt. In gleicher Weise verfügen die linksseitigen Luftfederbälge 2b über ein eigenes Sperrventil 21 b.

Zwischen den pneumatischen Leitungen 6 und 67 ist ein Trennventil 68 eingebaut, das beispielsweise als 2/2 Wegeventil ausgebildet ist und einen Steueranschluss 69 aufweist, der an den Anschluss 47 in der pneumatischen Leitung 14 angeschlossen ist. Die pneumatische Leitung 13 steht durch zwei Drosseln 88, 90 mit beiden pneumatischen Leitungen 6 und 8 in Verbindung. Weil die Luftfederbälge 2a und 2b im Fahrzustand getrennt geregelt sind können die Balgdrücke unterschiedlich sein. Durch die zwei Drosseln 88, 90 wird ein Durchschnittsdruck gebildet und in der pneumatischen Leitung 13 zu der Bremsanlage als Belastungssignal weitergeleitet. Weiterhin sind zwischen den Leitungen 13 und 31 Rückschlagventile 32a und 32b eingebaut.

Bei diesem Ausführungsbeispiel ist an die Niveauregelventileinheit 7 eine Höhenbeschränkungseinheit 63 angekoppelt, die zweckmäßig ein Rückschlagventil 83 und ein Höhenbeschränkungsventil 81 beispielsweise als 3/2-Wegeventil aufweist. Die Höhenbeschränkungsfunktion wird dadurch erreicht, dass die Höhenbeschränkungseinheit 63 durch eine pneumatische Leitung 64 mit dem Niveauregelventil 16 in Verbindung steht, wodurch das Niveauregelventil 16 ein Drucksteuersignal für die Höhenbeschränkungseinheit 63 aussteuert, welches in dem Betriebshöhenbereich des Fahrzeugrahmens dem Vorratsdruck entspricht und oberhalb dieser Höhe auf Null fällt. In der Ruhestellung des Höhenbeschränkungsventils 81 sind die pneumatischen Leitungen 80 und 79 miteinander verbunden, die einen Anschluss zu der pneumatischen Leitung 11 bzw. zu dem Anschluss 35 des Belüftungsventils 34 aufweisen. Das Höhenbeschränkungsventil 81 besitzt einen Steueranschluss 82, an welchen die pneumatische Leitung 64 der Niveauregelventileinheit 5 angeschlossen ist. Die pneumatische Leitung 64 ist weiterhin durch eine pneumatische Leitung 77 mit der pneumatischen Leitung 12 gekoppelt, wobei die pneumatische Leitung 77 ein Rückschlagventil 83 enthält, das nur in Richtung Niveauregeleinheit 5 eine Luftströmung zulässt. Schließlich ist das Höhenbeschränkungsventil 81 durch die pneumatische Leitung 78 an die Druckluftleitung 9 angeschlossen.

Wenn der Taster 49 des Betätigungsventils 50 zum Heben betätigt wird und die Höhe des Fahrzeugs eine maximale, dem Niveauregelventil 16 vorgegebene Höhe übersteigt, entlüftet das Niveauregelventil 16 den Druck aus der pneumatischen Leitung 64. Dann schaltet das Höhenbeschränkungsventil 81 die Druckluftleitung 9 und damit den Vorratsbehälter 3 an den Steueranschluss 35 des Belüftungsventils 34, wodurch dieses in Sperrstellung gerät und somit die Belüftung der Luftfederbälge 2 gestoppt wird. Parallel dazu sinkt auch am Steueranschluss 37 des Entlüftungsventils 36 der Druck, weshalb es in Durchgangsstellung geschaltet wird und den Druck in den Luftfederbälgen 2a, 2b derart einstellt, dass sich die Anhängerplattform auf die vom Niveauregelventil 16 vorgegebene Höhe einstellt. Diese Funktion schützt die Luftfederbälge 2a, 2b, wenn eine Entladung des Anhängers sehr schnell vonstatten geht und ein sog. "Katapulteffekt" entsteht.

Die Niveauregelventileinheit 7 ist für Auto Drive vorbereitet, d.h. wenn die pneumatische Leitung 14 druckbeaufschlagt wird, stellt sich die Niveauregelventileinheit 7 in Fahrtposition zurück.

Besonders bevorzugt sind von der Niveauregelventileinheit 7 wenigstens die Sperrventile 21 a und 21 b, das Belüftungsventil 34, das Entlüftungsventil 36 sowie die Leitungsverbindungen 20 und 70 in einer Baueinheit zusammengefasst, welche in unmittelbarer Nachbarschaft zu den Luftfederbälgen 2a, 2b angeordnet ist.

In den Steuerleitungen 9 und 14 sind Rückschlagventile 26, 27 angeordnet. Weiterhin sind die Steuerleitungen 14 und 31 mit den pneumatischen Leitungen 6, 8 und damit mit den Luftfederbälgen 2a, 2b durch Rückschlagventile 32a, 32b verbunden, wodurch in den Steuerleitungen 14, 31 die Spitzenwerte der dynamischen Balgdrücke gespeichert werden, die unter bestimmten Betriebszuständen höher als der Druck in dem Vorratsbehälter 3 sein können. Damit wird ein sicheres Schließen der Membranventile erreicht, auch wenn die dynamischen Balgdrücke höher als der Vorratsdruck sind.

### Bezugszahlenliste

- 1: Luftfederungseinrichtung
- 2: Luftfederbalg
- 3: Vorratsbehälter
- 4: Druckluftleitung
- 5: Niveauregeleinheit
- 6: pneumatische Leitung
- 7: Niveauregelventileinheit
- 8: pneumatische Leitung
- 9: Druckluftleitung
- 10: Handsteuereinheit
- 11: pneumatische Leitung
- 12: pneumatische Leitung
- 13: pneumatische Leitung
- 14: pneumatische Leitung
- 15: Steuereinheit
- 16: Niveauregelventil
- 17: Anschluss
- 18: Anschluss
- 19: Schieber
- 20: Leitungsverbindung
- 21: Sperrventil
- 22: Steueranschluss
- 23: pneumatische Leitung
- 24: Steuerventil
- 25: Steuereingang
- 26: Rückschlagventil
- 27: Rückschlagventil
- 28: Erinnerungsventil
- 29: Steuereingang
- 30: Drossel
- 31: Verbindungsleitung
- 32: Rückschlagventil
- 33: Verbindungsleitung
- 34: Belüftungsventil
- 35: Steueranschluss
- 36: Entlüftungsventil
- 37: Steueranschluss
- 38: Verbindungsleitung
- 39: Verbindungsleitung
- 40: Drossel
- 41: Drossel
- 42: Leitungsverbindung
- 43: Anschluss
- 44: Rückschlagventil
- 45: Rückschlagventil
- 46: Leitungsverbindung
- 47: Anschluss
- 48: Betätigungsventil
- 49: Handbetätigungsmittel
- 50: Betätigungsventil
- 51: Luftfederungseinrichtung
- 52: Betätigungsventil
- 53: Handsteuereinheit
- 54: pneumatische Leitung
- 55: pneumatische Leitung
- 56: Luftfederungseinrichtung
- 57: Steuerleitung
- 58: Betätigungsventil
- 59: Handsteuereinheit
- 60: pneumatische Leitung
- 61: Drossel
- 62: Handsteuereinheit
- 63: Höhenbeschränkungseinheit
- 64: pneumatische Leitung
- 65: Auto-Drive Ventileinheit
- 66: pneumatische Leitung
- 67: pneumatische Leitung
- 68: Trennungsventil
- 69: Steuereingang
- 70: Leitungsverbindung
- 71: Drossel
- 72: Drossel
- 73: Drossel
- 74: pneumatische Leitung
- 75: Rückschlagventil
- 76: Rückschlagventil
- 77: pneumatische Leitung
- 78: pneumatische Leitung
- 79: pneumatische Leitung
- 80: pneumatische Leitung
- 81: Höhenbeschränkungsventü
- 82: Steuereingang
- 83: Rückschlagventil
- 84: elektropneumatisches Schaltventil
- 86: Luftfederungseinrichtung
- 88: Drossel
- 90: Drossel

## Patentansprüche

1. Luftfederungseinrichtung (1) zum Heben und Senken des Fahrzeugaufbaus von luftgefederten Fahrzeugen mit Niveauregelung, mit wenigstens einem Niveauregelventil (16), mindestens einer Fahrzeugachse zugeordneten Luftfederbälgen (2; 2a, 2b), sowie mit einer Steuerventileinrichtung (7, 10; 53; 59; 62) zur manuellen Niveaueinstellung des Fahrzeugaufbaus unter Umgehung des Niveauregelventils (16), welche wenigstens ein in eine Leitungsverbindung (6, 66) des Niveauregelventils (16) mit den Luftfederbälgen (2; 2a, 2b) eingebautes Sperrventil (21; 21 a, 21 b), wenigstens ein manuell betätigtes Steuerventil (48, 50, 52, 58) sowie weitere Steuerventile (24, 28, 34, 36, 68, 81, 84) zum Be- und Entlüften der Luftfederbälge (2; 2a, 2b) beinhaltet, wobei sämtliche weiteren Steuerventile (24, 28, 34, 36, 68, 81, 84) druckmittelbetätigt sind, **dadurch gekennzeichnet, dass** die weiteren Steuerventile (24, 28, 34, 36, 68, 81, 84) wenigstens ein druckmittelbetätigtes Belüftungsventil (34) zwischen einem Druckmittelvorrat (3) und den Luftfederbälgen (2a, 2b) und wenigstens ein druckmittelbetätigtes Entlüftungsventil (36) im Hauptdruckmittelstrom zwischen dem Sperrventil (21; 21a, 21b) und den Luftfederbälgen (2a, 2b) beinhalten.

2. Luftfederungseinrichtung nach Anspruch 1, **dadurch gekennzeichnet, dass** das Sperrventil (21; 21a, 21b) durch direkte Ansteuerung oder durch wenigstens ein Vorsteuerventil (24) druckmittelbetätigt ausgebildet ist.

3. Luftfederungseinrichtung nach Anspruch 1, **dadurch gekennzeichnet, dass** das Sperrventil (21; 21a, 21b) und/oder das Vorsteuerventil (24) mechanisch angesteuert wird.

4. Luftfederungseinrichtung nach einem der vorhergehenden Ansprüche, **dadurch gekennzeichnet, dass** wenigstens das Sperrventil (21; 21a; 21b), das Belüftungsventil (34) und das Entlüftungsventil (36) in einer Baueinheit (7) zusammengefasst sind, welche in unmittelbarer Nachbarschaft zu den Luftfederbälgen (2; 2a, 2b) angeordnet ist.

5. Luftfederungseinrichtung nach Anspruch 4, **dadurch gekennzeichnet, dass** die manuell betätigbaren Steuerventile (48, 50, 52, 58) getrennt von der Baueinheit (7) angeordnet sind.

6. Luftfederungseinrichtung nach Anspruch 5, **dadurch gekennzeichnet, dass** wenigstens eines der manuell betätigten Steuerventile (48, 50, 52, 58) mehrfach vorhanden ist, um eine Betätigung an mehreren Stellen des Fahrzeugs zu ermöglichen.

7. Luftfederungseinrichtung wenigstens einem der vorhergehenden Ansprüche, **dadurch gekennzeichnet, dass** weiterhin eine Leitungsverbindung (20), an welcher sich die Druckmittelersorgungsleitungen (6, 8) der Luftfederbälge (2; 2a, 2b) auf rechts- und linksseitige Zweige aufteilen, in der Baueinheit (7) integriert ist.

8. Luftfederungseinrichtung nach wenigstens einem der vorangehenden Ansprüche, **dadurch gekennzeichnet, dass** die Baueinheit (7) mit einem pneumatischen Anschluss zur Einsteuerung eines Druckmittel-Steuersignals für die Betätigung der Steuerventileinrichtung (7, 10; 53; 59; 62) in den Betriebszustand "Fahrt" versehen ist.

9. Luftfederungseinrichtung nach Anspruch 8, **dadurch gekennzeichnet, dass** das auf den pneumatischen Anschluss gesteuerte Druckmittel-Steuersignal einen kurzzeitigen Druckimpuls beinhaltet, welcher durch ein selbsthaltendes Ventil (28) in ein andauernd wirkendes, ein Schalten des Sperrventils (21) bewirkendes Druckmittel-Steuersignal wandelbar ist.

10. Luftfederungseinrichtung nach wenigstens einem der vorangehenden Ansprüche, **dadurch gekennzeichnet, dass** wenigstens ein manuell betätigbares Steuerventil (58) für eine andauernde Entlüftung der Luftfederbälge (2; 2a, 2b) ohne andauernde Betätigung vorgesehen ist, wobei die andauernde Entlüftung im Betriebszustand "Fahrt" durch DruckmittelBeaufschlagung wenigstens eines der manuell betätigbaren Steuerventile (58) aufgelöst wird.

11. Luftfederungseinrichtung nach Anspruch 10, **dadurch gekennzeichnet, dass** durch das wenigstens eine manuell betätigbare Steuerventil (48, 58) wenigstens eines der weiteren Steuerventile (36) zum Entlüften der Luftfederbälge (2; 2a, 2b) dauerhaft in Entlüftungsstellung bringbar ist.

12. Luftfederungseinrichtung nach wenigstens einem der vorangehenden Ansprüche, **dadurch gekennzeichnet, dass** das Niveauregelventil (16) ein Entlüftungsventil (36) und ein Trennventil (68) derart ansteuert, dass eine weitere Belüftung der Luftbälge (2a, 2b) durch Entlüftung verhindert und damit das Niveau des Fahrzeugaufbaus auf ein vorgegebenes maximales Niveau begrenzt wird.

13. Luftfederungseinrichtung nach wenigstens einem der vorangehenden Ansprüche, **dadurch gekennzeichnet, dass** eine Höhenbeschränkungseinheit (63) wenigstens ein durch ein Druckmittelsignal des Niveauregelventils (16) steuerbares Ventil (81) beinhaltet, welches wenigstens ein Ventil (34) zum Belüften der Luftfederbälge (2; 2a, 2b) druckmittelsteuert.

14. Luftfederungseinrichtung nach Anspruch 13, **dadurch gekennzeichnet, dass** die Höhenbeschränkungseinheit (63) mit dem Niveauregelventil (16) derart zusammenwirkt, wobei sie bei einer manuellen Niveaueinstellung das Niveau des Fahrzeugaufbaus auf ein vorgegebenes maximales Niveau **dadurch** begrenzt, dass das Belüftungsventil (34) durch ein Druckmittel-Steuersignal in einen geschlossenen Zustand und das Entlüftungsventil (36) in einen offenen Zustand gebracht wird.

15. Luftfederungseinrichtung nach wenigstens einem der vorangehenden Ansprüche, **dadurch gekennzeichnet, dass** die druckmittelbetätigten Ventile (21, 28, 34, 36, 48, 50) derart ausgeführt und miteinander verschaltet sind, dass sich der Betriebszustand "Stop" nach Beendigung einer Betätigung des wenigstens einen manuell betätigten Steuerventils (48, 50) selbsttätig einstellt.

16. Luftfederungseinrichtung nach wenigstens einem der Ansprüche 12 bis 15, **dadurch gekennzeichnet, dass** rechtsseitige und linksseitige Luftfederbälge (2a, 2b) im Betriebszustand "Fahrt" über wenigstens zwei separate Leitungen (6, 66) von einer Niveauregeleinheit (5) angesteuert sind, wobei den separaten Leitungen (6, 66) das Trennventil (68) derart zwischengeordnet ist, dass die separaten Leitungen (6, 66) im Betriebszustand "Fahrt" durch Schließen des Trennventils (68) getrennt und in allen anderen Betriebszuständen durch Öffnen des Trennventils (68) miteinander verbunden sind und durch das Belüftungsventil (34) und das Entlüftungsventil (36) be- und entlüftet werden.

17. Luftfederungseinrichtung nach Anspruch 16, **dadurch gekennzeichnet, dass** die den rechtsseitigen und linksseitigen Luftfederbälgen (2a, 2b) zugeordneten separaten Leitungen (6, 8) durch Drosseln (32a, 32b) mit einer Leitung (13) verbunden sind, wodurch sich in dieser Leitung (13) ein Mittelwert der Druckwerte in den rechtsseitigen und linkseitigen Luftfederbälgen (2a, 2b) bildet.

## Claims

1. Pneumatic suspension unit (1) for raising and lowering the bodywork of pneumatically suspended vehicles with level control system, comprising at least one level control valve (16), pneumatic suspension bellows (2; 2a, 2b) associated with at least one vehicle axle, as well as a control valve means (7, 10; 53; 59; 62) for manual level control of the vehicle bodywork with bypass of said level control valve (16), including at least one non-return valve (21; 21 a, 21 b) mounted in a line (6, 66) connecting said level control valve (16) with said pneumatic suspension bellows (2; 2a, 2b), at least one manually operated control valve (48, 50, 52, 58) as well as further control valves (24, 28, 34, 36, 68, 81, 84) for aerating and venting said air suspension bellows (2; 2a, 2b), with all further control valves (24, 28, 34, 36, 68, 81, 84) being operated by means of a pressurised medium, **characterised in that** said further control valves (24, 28, 34, 36, 68, 81, 84) include at least one aerating valve (34) operated by means of a pressurised medium and mounted between a pressurised-medium reservoir (3) and said air suspension bellows (2a, 2b) and at least one venting valve (36) operated by means of a pressurised medium and mounted in the principal flow of pressurised medium between said non-return valve (21; 21 a, 21 b) and said air suspension bellows (2a, 2b).

2. Pneumatic suspension unit according to Claim 1, **characterised in that** said non-return valve (21; 21 a, 21 b) is configured either for direct control or for operation by a pressurised medium by means of at least one pilot valve (24).

3. Pneumatic suspension unit according to Claim 1, **characterised in that** said non-return valve (21; 21 a, 21 b) and/or said pilot valve (24) is/are mechanically controlled.

4. Pneumatic suspension unit according to any of the preceding Claims, **characterised in that** at least said non-return valve (21; 21 a, 21 b), said aerating valve (34) and said venting valve (36) are combined in a single module (7) that is disposed in the immediate vicinity to said air suspension bellows (2; 2a, 2b).

5. Pneumatic suspension unit according to Claim 4, **characterised in that** said manually operable control valves (48, 50, 52, 58) are mounted separately from said module (7).

6. Pneumatic suspension unit according to Claim 5, **characterised in that** at least one of said manually operable control valves (48, 50, 52, 58) is provided in a multiple number so as to permit operation at several sites on the vehicle.

7. Pneumatic suspension unit according to at least one of the preceding Claims, **characterised in that** furthermore a line connection (20), on which the supply lines (6, 8) supplying said air suspension bellows (2; 2a, 2b) with pressurised medium are distributed to branches on the right and the left sides, is integrated into said module (7).

8. Pneumatic suspension unit according to at least one of the preceding Claims, **characterised in that** said module (7) is provided with a pneumatic connector for feeding a pressurised-medium control signal for switching said control valve means (7, 10; 53; 59; 62) to the operating state "driving".

9. Pneumatic suspension unit according to Claim 8, **characterised in that** said pressurised-medium control signal includes a short-time pressure pulse that may be converted by means of a self-holding valve (28) into a permanently acting pressurised-medium control signal that induces switching of said non-return valve (21).

10. Pneumatic suspension unit according at least one of the preceding Claims, **characterised in that** at least one manually operable control valve (58) is provided for continuous venting of said pneumatic suspension bellows (2; 2a, 2b) without persistent operation, with such continuous venting in the operating condition "driving" being released by pressurised-medium action upon at least one of said manually operable control valves (58).

11. Pneumatic suspension unit according to Claim 10, **characterised in that** said at least one of said further control valves (36) is adapted to be permanently set into the venting position by means of said at least one manually operable control valve (48, 58).

12. Pneumatic suspension unit according to at least one of the preceding Claims, **characterised in that** said level control valve (16) controls an aerating valve (36) and an isolating valve (68) in such a manner that ongoing aeration of said air bellows (2a, 2b) will be prevented by venting and that hence the level of said vehicle bodywork will be limited to a predetermined maximum level.

13. Pneumatic suspension unit according to at least one of the preceding Claims, **characterised in that** a level-limiting unit (63) includes at least one valve (81) controllable by a pressurised-medium signal from said level control valve (16), which valve controls at least one valve (34) for aerating said air suspension bellows (2; 2a, 2b) by means of a pressurised medium.

14. Pneumatic suspension unit according to Claim 13, **characterised in that** said level-limiting unit (63) interacts with said level control valve (16) in such a way that, with manual level control, it limits the level of said vehicle bodywork to a predetermined maximum level by the function that said aerating valve (34) is switched by a pressurised-medium control signal into a closed condition whilst said venting valve (36) is set into an open condition.

15. Pneumatic suspension unit according to at least one of the preceding Claims, **characterised in that** said valves (21, 28, 34, 36, 48, 50) operated by means of a pressurised medium are configured and connected to each other in such a way that the operating state "stop" will be automatically reached after operation of said at least one manually operated control valve (48, 50) has been terminated.

16. Pneumatic suspension unit according to at least one of the Claims 12 to 15, **characterised in that** in the operating state "driving", air suspension bellows (2a, 2b) on the right side and on the left side are controlled by a level control unit (5) via at least two separate lines (6, 66), with said isolating valve (68) being interposed between said separate lines (6, 66) in such a manner that, in the operating state "driving", said separate lines (6, 66) are separated by closing said isolating valve (68) whilst they are connected in all other operating states by opening said isolating valve (68) and are aerated and vented by means of said aerating valve (34) and said venting valve (36).

17. Pneumatic suspension unit according to Claim 16, **characterised in that** said separate lines associated with said air suspension bellows (2a, 2b) on the right and left sides are connected by means of throttles (32a, 32b) to a line (13) so that a mean value of the pressure values in said air suspension bellows (2a, 2b) on the left and right sides will be established in said line (13).

## Revendications

1. Système pneumatique de suspension (1) à lever et abaisser la carrosserie des véhicule à suspension pneumatique, pourvus d'un système régulateur de niveau, comprenant au moins un soupape de correction d'assiette (16), des soufflets de suspension pneumatique (2; 2a, 2b) affectés à au moins un essieu du véhicule, ainsi qu'un moyen à clapets de distribution (7, 10; 53; 59; 62) pour la correction manuelle d'assiette de la carrosserie à bipasse de ladite soupape de correction d'assiette (16), renfermant au moins un clapet antiretour (21; 21a, 21 b) monté dans une conduite (6, 66) reliant ladite soupape de correction d'assiette (16) avec lesdits soufflets de suspension pneumatique (2; 2a, 2b), au moins un clapet de distribution à commande manuelle (48, 50, 52, 58) ainsi que des autres soupapes de distribution (24, 28, 34, 36, 68, 81, 84) à aérer et désaérer lesdits soufflets de suspension pneumatique (2; 2a, 2b), à tous les autres soupapes de distribution (24, 28, 34, 36, 68, 81, 84) étant commandé moyennant un fluide sous pression, **caractérisé en ce que** lesdites autres soupapes de distribution (24, 28, 34, 36, 68, 81, 84) comprennent au moins une soupape d'aération (34) commandée moyennant un fluide sous pression et montée entre un réservoir de fluide sous pression (3) et lesdits soufflets de suspension pneumatique (2a, 2b) et au moins une soupape de désaération (36) commandée moyennant un fluide sous pression et montée dans la voie d'écoulement principale du fluide sous pression entre ledit clapet antiretour (21; 21a, 21b) et lesdits soufflets de suspension pneumatique (2a, 2b).

2. Système pneumatique de suspension selon la revendication 1, **caractérisé en ce que** ledit clapet antiretour (21; 21a, 21b) est conçu soit pour une commande directe ou pour un actionnement moyennant un fluide sous pression par l'opération d'au moins une soupape pilote (24).

3. Système pneumatique de suspension selon la revendication 1, **caractérisé en ce que** ledit clapet antiretour (21; 21a, 21b) et/ou ladite soupape pilote (24) est/sont commandé(s) par voie mécanique.

4. Système pneumatique de suspension selon une quelconque des revendications précédentes, **caractérisé en ce qu'**au moins ledit clapet antiretour (21; 21a, 21b), ladite soupape d'aération (34) et ladite soupape de désaération (36) sont combinés dans un seul module (7), qui est disposé au voisinage immédiat desdits soufflets de suspension pneumatique (2; 2a, 2b).

5. Système pneumatique de suspension selon la revendication 4, **caractérisé en ce que** lesdits clapets de distribution à commande manuelle (48, 50, 52, 58) sont installés en étant séparé dudit module (7).

6. Système pneumatique de suspension selon la revendication 5, **caractérisé en ce qu'**au moins un desdits clapets de distribution à commande manuelle (48, 50, 52, 58) est disposé en nombre multiple afin de permettre une opération à plusieurs sites au véhicule.

7. Système pneumatique de suspension selon au moins une quelconque des revendications précédentes, **caractérisé en ce qu'**au plus une conduite de connexion (20) est intégrée dans ledit module (7), sur laquelle les conduites d'alimentation (6, 8) sont branchés, qui alimentent lesdits soufflets de suspension pneumatique (2; 2a, 2b) en fluide sous pression, vers des branchements du côté droit et du côté à gauche.

8. Système pneumatique de suspension selon au moins une quelconque des revendications précédentes, **caractérisé en ce que** ledit module (7) est muni d'un connecteur pneumatique à alimenter un signal de commande en fluide sous pression afin de passer ledit moyen à clapets de distribution (7, 10; 53; 59; 62) en l'état de régime « marche ».

9. Système pneumatique de suspension selon la revendication 8, **caractérisé en ce que** ledit signal de commande en fluide sous pression renferme une impulsion de pression temporaire, que se peut convertir, moyennant une soupape d'auto entretien (28), en un signal de commande en fluide sous pression à action permanente, qui cause la commutation dudit clapet antiretour (21).

10. Système pneumatique de suspension selon au moins une quelconque des revendications précédentes, **caractérisé en ce qu'**au moins un clapet de distribution à commande manuelle (58) est monté pour la désaération en continu desdits soufflets de suspension pneumatique (2; 2a, 2b) sans commande en continu, à une telle désaération en continu en le régime « marche » étant désactivée moyennant un effet du milieu sous pression sur au moins un desdits clapets de distribution à commande manuelle (58).

11. Système pneumatique de suspension selon la revendication 10, **caractérisé en ce que** ledit au moins un desdites autres soupapes de distribution (36) est apte à être placé en continu en la position de désaération moyennant ledit au moins un clapet de distribution à commande manuelle (48, 58).

12. Système pneumatique de suspension selon au moins une quelconque des revendications précédentes, **caractérisé en ce que** ladite soupape de correction d'assiette (16) commande une soupape d'aération (36) et une vanne de séparation (68) d'une telle façon, qu'une aération continue desdits soufflets pneumatique (2a, 2b) soit empêchée par désaération et **en ce que** donc le niveau de ladite carrosserie soit limité à un niveau maximal prédéterminé.

13. Système pneumatique de suspension selon au moins une quelconque des revendications précédentes, **caractérisé en ce qu'**une unité de limitation de niveau (63) comprend au moins une soupape (81) commandable par un signal en fluide sous pression à partir de ladite soupape de correction d'assiette (16), cette soupape commandant au moins une soupape (34) pour l'aération desdits soufflets de suspension pneumatique (2; 2a, 2b) moyennant un fluide sous pression.

14. Système pneumatique de suspension selon la revendication 13, **caractérisé en ce que** ladite unité de limitation de niveau (63) interagit avec ladite soupape de correction d'assiette (16) d'une telle façon, à correction manuelle d'assiette, qu'elle limite le niveau de ladite carrosserie à un niveau maximal prédéterminé par la fonction, que ladite soupape d'aération (34) est commandée par un signal de commande en fluide sous pression en un état fermé, pendant que ladite soupape de désaération (36) est placée en un état ouvert.

15. Système pneumatique de suspension selon au moins une quelconque des revendications précédentes, **caractérisé en ce que** lesdites soupapes (21, 28, 34, 36, 48, 50) commandées moyennant un fluide sous pression sont conçues et reliées l'un à l'autre d'une telle manière, que le régime « arrêt » soit achevé de façon automatique après la terminaison de la commande dudit au moins un clapet de distribution à commande manuelle (48, 50).

16. Système pneumatique de suspension selon au moins une quelconque des revendications 12 à 15, **caractérisé en ce qu'**en régime « marche », des soufflets de suspension pneumatique (2a, 2b) du côté droit et de gauche soient commandés par une unité de correction d'assiette (5) via au moins deux conduites séparées (6, 66), à ladite vanne de séparation (68) étant interposée entre lesdites conduites séparées (6, 66) d'une telle manière, qu'en le régime « marche », lesdites conduites séparées (6, 66) soient séparées en fermant ladite vanne de séparation (68), pendant qu'elles sont reliées en tous les autres régimes en ouvrant ladite vanne de séparation (68) et sont aérées et désaérées moyennant ladite soupape d'aération (34) et ladite soupape de désaération (36).

17. Système pneumatique de suspension selon la revendication 16, **caractérisé en ce que** lesdites conduites séparées affectées auxdits soufflets de suspension pneumatique (2a, 2b) du côté droit et de gauche sont raccordées moyennant des papillons (32a, 32b) à un conduit (13) d'une telle façon, qu'une valeur moyenne des valeurs de pression dans lesdits soufflets de suspension pneumatique (2a, 2b) du côté droit et de gauche soit établie dans ledit conduit (13).
